# EUROPÄISCHE PATENTSCHRIFT

(11) **EP 4 423 409 B1**
(45) Veröffentlichungstag und Bekanntmachung des Hinweises auf die Patenterteilung: **09.07.2025**
(21) Anmeldenummer: 22800280.4
(22) Anmeldetag: 13.10.2022
(51) Int. Cl.: F16H 57/04

(54) **KÜHLMITTELVERSORGUNGSSYSTEM FÜR EINE ELEKTRISCH BETRIEBENE FAHRZEUGACHSE**
COOLANT SUPPLY SYSTEM FOR AN ELECTRICALLY OPERATED VEHICLE AXLE
SYSTÈME D'ALIMENTATION EN FLUIDE DE REFROIDISSEMENT POUR UN ESSIEU DE VÉHICULE À ENTRAÎNEMENT ÉLECTRIQUE

(30) Priorität: 28.10.2021 DE 102021128068
(43) Veröffentlichungstag der Anmeldung: 04.09.2024
(73) Patentinhaber: Audi AG, 85045 Ingolstadt (DE)
(72) Erfinder: WEBER, Andreas, 85055 Ingolstadt (DE); GREITER, Ivo, 85117 Eitensheim (DE); GLOEDE, Harald, 85104 Pförring (DE); TSCHENTSCHER, Herbert, 93339 Riedenburg (DE); RÖTHLINGSHÖFER, Frank, 85055 Ingolstadt (DE); SCHLITTENBAUER, Lena, 93336 Altmannstein (DE)
(74) Vertreter: Bierschneider, Walter
(86) Internationale Anmeldenummer: PCT/EP2022/078503
(87) Internationale Veröffentlichungsnummer: WO 2023/072606

(56) Entgegenhaltungen:
- DE-A1- 102019 114 476
- JP-A- 2018 057 243
- JP-U- S49 148 330
- US-A1- 2019 285 168
- US-B1- 10 569 202

## Beschreibung

Die Erfindung betrifft ein Kühlmittelversorgungssystem für eine Antriebsvorrichtung einer elektrisch betriebenen Fahrzeugachse eines zweispurigen Fahrzeugs nach dem Oberbegriff des Anspruches 1.

Bei einem elektrisch betriebenen, zweispurigen Fahrzeug kann beispielhaft eine elektrisch angetriebene Fahrzeugachse eine Elektromaschine aufweisen. Diese kann achsparallel zu den, zu den Fahrzeugrädern geführten Flanschwellen angeordnet sein. In diesem Fall kann die Elektromaschine über eine einfache oder doppelte Stirnrad-Getriebestufe auf ein Achsdifferenzial und weiter auf die zu den Fahrzeugrädern geführten Flanschwellen der Fahrzeug-Fahrzeugachse abtreiben.

Eine solche Elektromaschine kann als nasslaufende Elektromaschine realisiert sein, in der der Stator, insbesondere die Wickelköpfe der Statorwicklungen, aktiv gekühlt werden. Für eine solche aktive Stator-Kühlung ist ein gattungsgemäßes Kühlmittelversorgungssystem vorgesehen, das einen Elektromaschinen-Hydraulikkreis aufweist, in dem ein Kühlmitteltank, der Innenraum eines zylindrischen Statorgehäuses der Elektromaschine sowie ein sich in Axialrichtung längs des Statorgehäuses erstreckender Statorgehäuse-Sumpf eingebunden ist. In den Statorgehäuse-Sumpf kann sich das vom Statorgehäuse ablaufende Kühlmittel sammeln und von dort mit Hilfe zumindest einer Elektromaschinen-Rückführpumpe in den Kühlmitteltank rückgeführt werden.

Im Stand der Technik erstreckt sich der Statorgehäuse-Sumpf zentral unterhalb des Statorgehäuses in der Axialrichtung. Der Statorgehäuse-Sumpf weist zudem, in Axialrichtung betrachtet, in etwa mittig eine Absaugstelle auf, an der das gesammelte Kühlmittel von der Elektromaschinen-Rückführpumpe in Richtung Kühlmitteltank abgesaugt wird. Je nach Fahrbetriebszustand, zum Beispiel bei einer Beschleunigungsfahrt, einer Kurvenfahrt, einer Bergauf- oder Bergabfahrt, kann sich das im Statorgehäuse-Sumpf gesammelte Kühlmittel von der Sumpf-Absaugstelle fliehkraftbedingt wegverlagern. In diesem Fall ist eine betriebssichere Rückführung des Kühlmittels vom Statorgehäuse-Sumpf in Richtung Kühlmitteltankt beeinträchtigt.

Aus der DE 10 2019 114 476 A1 ist eine gattungsgemäße Ölwanne mit zweigeteiltem Sammelraum bekannt. Aus der DE 2 139 740 A ist eine Ölwanne für einen Motor bekannt. Aus der DE 10 2008 040 691 A1 ist ein Getriebeölraum bekannt.

Die Aufgabe der Erfindung besteht darin, ein Kühlmittelversorgungssystem für eine Antriebsvorrichtung einer elektrisch betriebenen Fahrzeugachse eines zweispurigen Fahrzeugs bereitzustellen, bei dem in unterschiedlichen Fahrbetriebszuständen betriebssicher das Kühlmittel umwälzbar ist.

Die Aufgabe ist durch die Merkmale des Anspruches 1 gelöst. Bevorzugte Weiterbildungen der Erfindung sind in den Unteransprüchen offenbart.

Die Erfindung geht von einem Kühlmittelversorgungssystem für eine Antriebsvorrichtung einer elektrisch betriebenen Fahrzeugachse eines zweispurigen Fahrzeugs aus. Die Antriebsvorrichtung weist eine nasslaufende Elektromaschine auf. Das Kühlmittelversorgungssystem besteht aus einem Elektromaschinen-Hydraulikkreis. In diesem sind ein Kühlmitteltank, der Innenraum eines zylindrischen Statorgehäuses der Elektromaschine sowie ein sich in Axialrichtung längs des zylindrischen Statorgehäuses erstreckender Statorgehäuse-Sumpf eingebunden. In dem Statorgehäuse-Sumpf sammelt sich das vom Statorgehäuse ablaufende Kühlmittel. Das Kühlmittel wird von dort mittels zumindest einer Elektromaschinen-Rückführpumpe in den Kühlmitteltank rückgeführt. Gemäß dem kennzeichnenden Teil des Anspruches 1 weist der Statorgehäuse-Sumpf an jedem seiner axial gegenüberliegenden Axialseiten eine Absaugstelle auf, an der das gesammelte Kühlmittel von der Rückführpumpe absaugbar ist. Mit Hilfe der beiden Absaugstellen kann im Vergleich zum Stand der Technik bei einer Vielzahl von Fahrbetriebszuständen ein betriebssicheres Absaugen des Kühlmittels in Richtung Kühlmitteltank gewährleistet werden, wodurch das Kühlmittel im Elektromaschinen-Hydraulikkreis zuverlässig umwälzbar ist.

In einer technischen Umsetzung kann die Elektromaschine im Quereinbau achsparallel zur Fahrzeugachse verbaut sein. In diesem Fall ist eine Absaugstelle des Statorgehäuse-Sumpfes auf der rechten Fahrzeugseite positioniert, während die andere Absaugstelle des Statorgehäuse-Sumpfes auf der linken Fahrzeugseite positioniert ist. Im Falle einer Fahrzeug-Kurvenfahrt nach links wird das Kühlmittel im Statorgehäuse-Sumpf fliehkraftbedingt in Richtung rechte Absaugstelle verlagert. Demgegenüber wird bei einer Fahrzeug-Kurvenfahrt nach rechts das Kühlmittel im Statorgehäuse-Sumpf fliehkraftbedingt in Richtung linke Absaugstelle verlagert. Speziell bei Kurvenfahrten ist daher das Kühlmittel betriebssicher von zumindest einer der beiden Absaugstellen des Statorgehäuse-Sumpfes in Kühlmitteltank rückführbar.

In einer ersten Ausführungsvariante sind sowohl die rechte Absaugstelle als auch die linke Absaugstelle unmittelbar im Statorgehäuse-Sumpf angeordnet. Jeder der beiden Absaugstellen kann jeweils eine eigene Elektromaschinen-Rückführpumpe zugeordnet.

In der Fahrzeugachse kann die Elektromaschine über eine einfache oder doppelte Stirnrad-Getriebestufe auf ein Achsdifferential und von dort weiter auf die zu den Fahrzeugrädern geführten Flanschwellen der Fahrzeugachse abtreiben. In diesem Fall ist es bevorzugt, wenn das Kühlmittelversorgungssystem zusätzlich einen weitgehend vom Elektromaschinen-Hydraulikkreis separaten Getriebe-Hydraulikkreis aufweist. In dem Getriebe-Hydraulikkreis kann der Kühlmitteltank, der Getriebe-Innenraum und ein am Getriebeboden ausgebildeter Getriebe-Sumpf eingebunden sein. Im Getriebe-Sumpf wird das von Getriebekomponenten ablaufende Kühlmittel an einer Getriebe-Absaugstelle gesammelt und von dort mit Hilfe einer Getriebe-Rückführpumpe in den Kühlmitteltank rückgeführt. Das Getriebe kann unmittelbar an einer der Statorgehäuse-Axialseiten der Elektromaschine angeflanscht sein, so dass das Statorgehäuse mit dem Getriebegehäuse axial verlängert ist.

Bei der obigen Getriebe-Anordnung ist kann die folgende Ausführungsvariante realisiert werden: So kann der getriebenahen Statorgehäuse-Axialseite eine Strömungsverbindung bereitgestellt werden, die den Statorgehäuse-Sumpf mit dem Getriebe-Sumpf strömungstechnisch verbindet. Das sich zum Beispiel in Folge einer Kurvenfahrt an der getriebenahen Seite des Statorgehäuse-Sumpfes sammelnde Kühlmittel wird über die Strömungsverbindung bis in den Getriebe-Sumpf geleitet. In diesem Fall kann die getriebeseitige Absaugstelle in Doppelfunktion nicht nur das sich im Getriebe-Sumpf sammelnde Kühlmittel zum Kühlmitteltank zurückführen, sondern zusätzlich auch das vom Statorgehäuse-Sumpf übergeleitete Kühlmittel. Von daher kann auf eine eigene Statorgehäuse-Absaugstelle an der getriebenahen Seite des Statorgehäuse-Sumpfes verzichtet werden.

In einer bauraumgünstigen Ausführungsvariante kann die zumindest eine Elektromaschinen-Rückführpumpe, insbesondere zusammen mit der Getriebe-Rückführpumpe und/oder dem Getriebe, an einer gemeinsamen Statorgehäuse-Axialseite angeordnet sein. Dabei kann sich der Statorgehäuse-Sumpf in Axialrichtung bis zur jeweiligen Statorgehäuse-Axialseite erstrecken. Das Statorgehäuse kann als ein Gussteil realisiert sein, an dem der Statorgehäuse-Sumpf materialeinheitlich sowie einstückig angeformt ist. Die an der pumpenfernen Statorgehäuse-Axialseite angeordnete Absaugstelle kann über eine zusätzliche Rückführleitung mit der Elektromaschinen-Rückführpumpe verbunden sein. In einer bauraumgünstigen Ausführungsvariante kann sich die Rückführleitung achsparallel zum Statorgehäuse-Sumpf erstrecken. Zudem kann die Rückführleitung zusammen mit dem Statorgehäuse-Sumpf materialeinheitlich und einstückig am Statorgehäuse angeformt sein. Nachfolgend sind Ausführungsbeispiele der Erfindung anhand der beigefügten Figuren beschrieben. Es zeigen:
- Fig. 1: in einer grob schematischen Schnittdarstellung die Elektromaschine mit zugeordnetem Kühlmittelversorgungssystem;
- Fig. 2: in einer Detailansicht eine der beiden Absaugstellen im Statorgehäuse-Sumpf; und
- Fig. 3: in einer Ansicht entsprechend Fig. 1 ein zweites Ausführungsbeispiel der Erfindung.

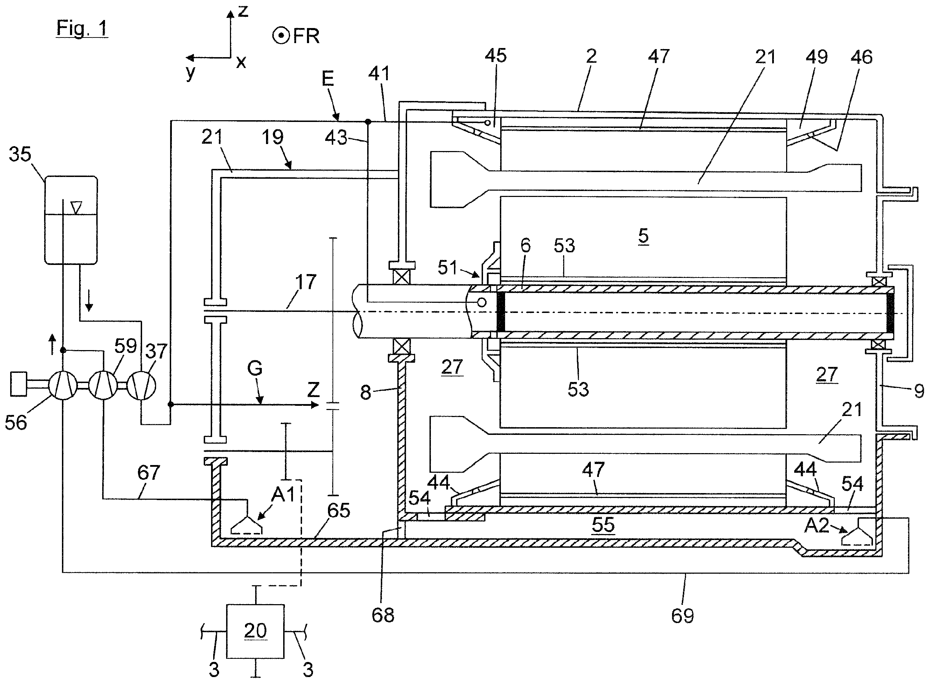

In der Fig. 1 ist eine Antriebsvorrichtung für eine Fahrzeugachse eines zweispurigen Fahrzeugs angedeutet. Die Antriebsvorrichtung weist eine Elektromaschine auf, die im Quereinbau achsparallel zu den, zu den Fahrzeugrädern geführten Flanschwellen 3 angeordnet ist. In einem Statorgehäuse 2 der Elektromaschine ist ein Stator 4 mit einem damit zusammenwirkenden Rotor 5 angeordnet. Die Rotorwelle 6 ist an axial gegenüberliegenden Gehäusewänden 8, 9 des Statorgehäuses 2 in Lageröffnungen drehgelagert. Die Rotorwelle 6 der Elektromaschine ist zum Beispiel über eine Passverzahnung drehfest mit einer Getriebeeingangswelle 17 eines Getriebes 19 verbunden. In der Fig. 1 ist das Getriebe 19 als ein zweistufiges Stirnradgetriebe realisiert, das auf ein Achsdifferential 20 abtreibt. In der Fig. 1 ist das Achsdifferential 20 aus Gründen der Übersichtlichkeit außerhalb eines Getriebegehäuses 21 positioniert. Tatsächlich kann das Achsdifferential 20 zusammen mit dem zweistufigen Stirnradgetriebe innerhalb des Getriebegehäuses 21 positioniert sein.

In der Fig. 1 weist der Stator 4 eine Vielzahl von Statorwicklungen auf, von denen in der Fig. 1 lediglich zwei Statorwicklungen 21 grob angedeutet sind. Jede Statorwicklung 21 weist axial beidseitig jeweils einen Wickelkopf auf, der in einen Wickelkopfraum 27 einragt. Jeder Wickelkopfraum 27 ist in einem später beschriebenen Elektromaschinen-Hydraulikkreis E eingebunden, mit dessen Hilfe der jeweilige Wickelkopfraum 27 mit Kühlmittel beaufschlagbar ist, um die Wickelköpfe des Stators 4 zu kühlen. In jedem der Wickelkopfräume 27 bewegt sich ein Kühlmittel/Luftgemisch in Wirbelströmung um die sich mit hoher Drehzahl drehende Rotorwelle 5.

Wie aus der Figur 1 weiter hervorgeht, weist der Elektromaschinen-Hydraulikkreis E einen Kühlmitteltank 35 auf, der über eine Saugleitung mit einer Saugpumpe 37 verbunden ist. Von der Saugpumpe 37 führt eine Druckleitung zu Kühlmittel-Versorgungsleitungen 41, 43. Mittels der Versorgungsleitung 41 wird Kühlmittel in einen radial äußeren umlaufenden Ringspalt 45 gespeist. Von dort wird das Kühlmittel über radial äußere Statorkanäle 47 zu einem weiteren Ringspalt 49 im rechten Wickelkopfraum 27 geführt. Die beiden Ringspalte 45, 47 sind über Spritzringe 44 vom jeweiligen Wickelkopfraum 27 getrennt. Jede der Spritzringe 44 weist in Umfangsrichtung verteite Düsen 46 auf, über die Kühlmittel (das heißt Öl) in den jeweiligen Wickelkopfraum 27 einspritzbar ist.

Mittels der Versorgungsleitung 43 wird Kühlmittel durch die Rotorwelle 6 geführt und über eine Strömungsverbindung 51 in radial innere Statorkanäle 53 bis in den rechten Wickelkopfraum 27 geleitet. Zudem wird Kühlmittel ausgehend von der Strömungsverbindung 51 sowie ausgehend von der rechten Mündungsöffnung der radial inneren Statorkanäle 53 nach radial außen in Richtung Wickelköpfe abgeschleudert.

Die beiden Wickelkopfräume 27 sind im Statorgehäuse-Innenraum über die Rotor-/Stator-Anordnung im Wesentlichen kühlmitteldicht voneinander getrennt. Um eine Strömungsverbindung zwischen den beiden Wickelkopfräumen 27 bereitzustellen, befinden sich an den beiden Statorgehäuse-Axialseiten jeweils eine Ablauföffnung 54. Diese sind im Gehäuseboden des Statorgehäuses 2 positioniert. Über die beiden Ablauföffnungen 54 kann das sich im jeweiligen Wickelkopfraum 27 bodenseitig sammelnde Kühlmittel in einen darunter liegenden Statorgehäuse-Sumpf 55 abfließen. Der Statorgehäuse-Sumpf 55 ist in der Einbaulage zentral, das heißt in vertikaler Flucht zur Rotorachse, am tiefsten Punkt unterhalb des Statorgehäuses 2 positioniert, so dass das Kühlmittel unter Schwerkraftwirkung vom Statorgehäuse-Inneren in den Statorgehäuse-Sumpf 55 abfließen kann.

In der Figur 1 erstreckt sich der Statorgehäuse-Sumpf 55 in etwa über die gesamte Statorgehäuse-Länge in Axialrichtung. Zudem ist an jeder der beiden Axialseiten im Statorgehäuse-Sumpf 55 jeweils eine getriebeseitige Absaugstelle A1 und eine getriebeferne Absaugstelle A2 vorgesehen. An der getriebeseitigen Absaugstelle A1 wird das Kühlmittel von einer Getriebe-Rückführpumpe 59 abgesaugt. An der getriebefernen Absaugstelle A2 wird das Kühlmittel von einer Elektromaschinen-Rückführpumpe 56 abgesaugt.

Die Getriebe-Rückführpumpe 59 ist Bestandteil eines Getriebe-Hydraulikkreises G des Kühlmittelversorgungssystems. In dem Getriebe-Hydraulikkreis G ist der Kühlmitteltank 35 über die Saugleitung mit der Saugpumpe 37 verbunden. Mittels der Saugpumpe 37 kann das vom Kühlmitteltank 25 kommen Kühlmittel in einer Getriebe-Versorgungseinleitung bis zu einer Zahneingriffsstelle Z des Getriebes 19 geführt werden, um Getriebekomponenten zu schmieren. Von dort tropft das Kühlmittel ab und sammelt es sich am Getriebeboden in einen Getriebe-Sumpf 65. Im Getriebe-Sumpf 65 wird das Kühlmittel mit Hilfe der Getriebe-Rückführpumpe 59 in einer Rückführleitung 67 zurück in den Kühlmitteltank 35 geführt.

In der Fig. 1 sind die Saugpumpe 37, die Getriebe-Rückführpumpe 59 und die Elektromaschinen-Rückführpumpe 56 Bestandteile einer Mehrfachpumpe (Kombinationspumpe). Bei einer solchen Mehrfachpumpe werden die Einzelpumpen mit einer gemeinsamen Antriebswelle angetrieben. Die gemeinsame Antriebswelle ist wiederum in trieblicher Verbindung mit einem als Antrieb wirkenden Elektromotor.

Wie bereits erwähnt, ist in der Figur 1 die Elektromaschine im Quereinbau achsparallel zur Fahrzeugachse verbaut. Von daher ist die getriebeseitige Absaugstelle A1 auf der linken Fahrzeugseite positioniert, während die getriebeferne Absaugstelle A2 auf der rechten Fahrzeugseite positioniert ist. Bei einer Fahrzeug-Kurvenfahrt nach links wird das im Statorgehäuse-Sumpf 55 befindliche Kühlmittel fliehkraftbedingt in Richtung rechte Absaugstelle A2 verlagert. Demgegenüber wird bei einer Fahrzeug-Kurvenfahrt nach rechts das Kühlmittel im Statorgehäuse-Sumpf 55 fliehkraftbedingt in Richtung linke Absaugstelle A1 verlagert. Von daher ist bei Kurvenfahrten das Kühlmittel betriebssicher entweder über die linke Absaugstelle A1 oder über die rechte Absaugstelle A2 in den Kühlmitteltank 35 rückführbar.

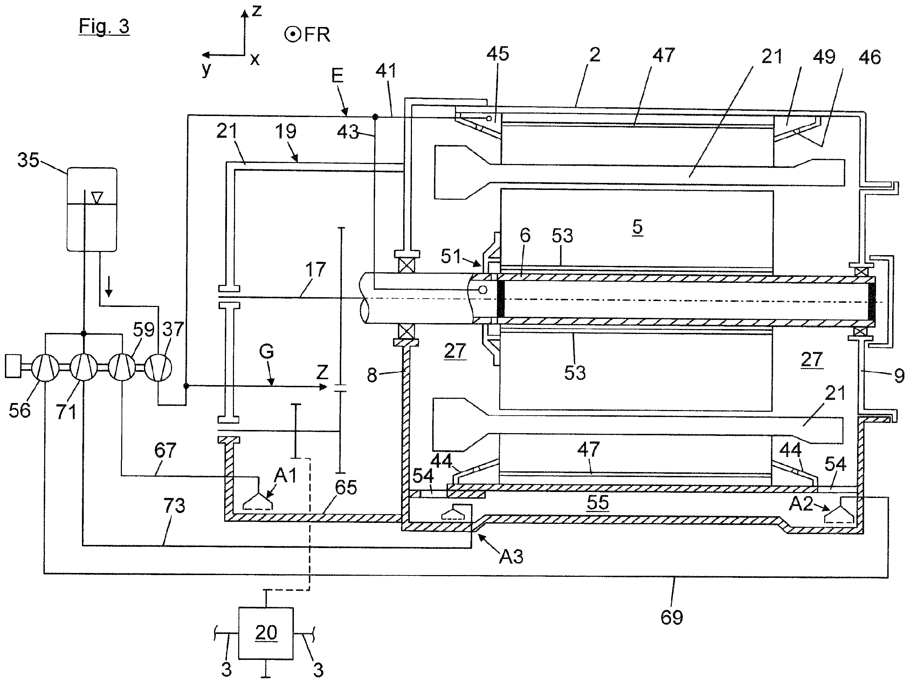

Ein Kern der Erfindung besteht darin, dass an der getriebenahen Seite des Statorgehäuse-Sumpfes 55 eine Strömungsverbindung 68 zum Getriebe-Sumpf 65 ausgebildet ist. Bei einer Kurvenfahrt nach rechts wird daher das Kühlmittel im Statorgehäuse-Sumpf 55 über die Strömungsverbindung 68 in den Getriebe-Sumpf 65 übergeleitet. In diesem Fall wird an der getriebeseitigen Absaugstelle A1 in Doppelfunktion nicht nur das im Getriebe-Sumpf 65 gesammelte Kühlmittel in Richtung Kühlmitteltank 35 abgesaugt, sondern zusätzlich auch das vom Statorgehäuse-Sumpf 55 übergeleitete Kühlmittel. Auf eine eigene Statorgehäuse-Absaugstelle A3 (wie sie in der Fig. 3 angedeutet ist) kann daher an der getriebenahen Seite des Statorgehäuse-Sumpfes 55 verzichtet werden.

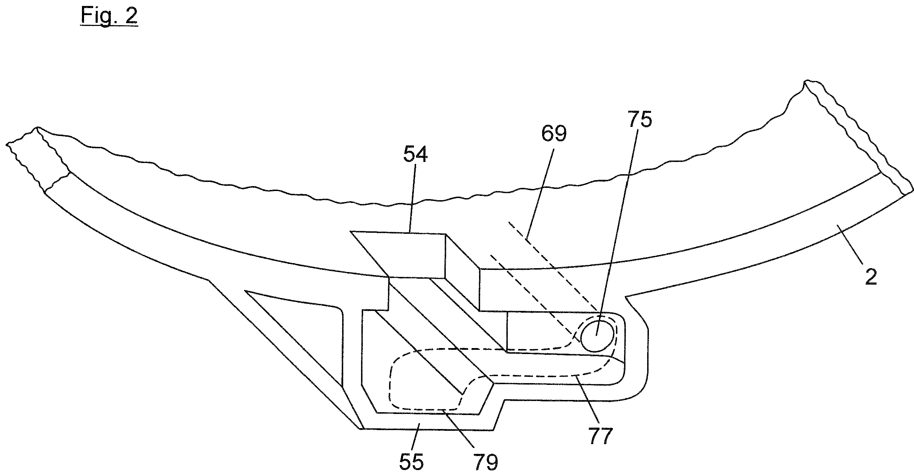

Wie aus der Figur 1 weiter hervorgeht, sind sämtliche Pumpen 37, 56, 59 bauraumgünstig an der linken Axialseite des Statorgehäuses 2 positioniert. Die an der pumpenfernen Statorgehäuse-Axialseite angeordnete Absaugstelle A2 ist über eine Rückführleitung 69 mit der Elektromaschinen-Rückführpumpe 56 verbunden. Die Rückführleitung 69 ist gemäß der Figur 2 achsparallel zum Statorgehäuse-Sumpf 55 positioniert. Das Statorgehäuse 2 kann als ein Gussteil realisiert sein, an dem sowohl der Statorgehäuse-Sumpf 5 als auch die Rückführleitung 69 materialeinheitlich und einstückig angeformt sind.

In der Figur 2 ist zudem die Rückführleitung 69 gegenüber dem Statorgehäuse-Sumpf 55 um einen Höhenversatz nach oben versetzt. Im Hinblick auf eine betriebssichere Strömungsverbindung ist der Statorgehäuse-Sumpf 55 und eine Mündungsöffnung 75 der Rückführleitung 69 über einen gestrichelt angedeuteten Saugstutzen 77 verbunden. Der Saugstutzen 77 weist eine Mündungsöffnung 79 auf, in einer horizontalen Ebene liegt und in das Kühlmittel eintaucht.

In der Figur 3 ist ein zweites Ausführungsbeispiel gezeigt, das im Wesentlichen denselben Aufbau sowie dieselbe Funktionsweise aufweist wie das in der Figur 1 gezeigte Ausführungsbeispiel. Von daher wird auf die Vorbeschreibung verwiesen. Im Unterschied zur Figur 1 ist in der Figur 3 auf eine Strömungsverbindung 68 zwischen dem Statorgehäuse-Sumpf 55 und dem Getriebe-Sumpf 65 verzichtet. Anstelle dessen weist die linken Seite des Statorgehäuse-Sumpfes 55 an seiner getriebenahen Seite eine eigene Absaugstelle A3 auf. Diese ist über eine Rückführleitung 73 mit einer zweite Elektromaschinen-Rückführpumpe 71 verbunden, die Kühlmittel von der Absaugstelle A3 in den Kühlmitteltank 35 rückführt.

### BEZUGSZEICHENLISTE

- 2: Statorgehäuse
- 3: Flanschwellen
- 4: Stator
- 5: Rotor
- 6: Rotorwelle
- 8, 9: Gehäusewänden
- 17: Getriebeeingangswelle
- 19: Getriebe
- 21: Statorwicklungen
- 27: Wickelkopfraum
- 35: Kühlmitteltank
- 37: Saugpumpe
- 41, 43: Kühlmittel-Versorgungsleitungen
- 44: Kühlmittel-Spritzringe
- 45: Ringspalt
- 46: Düsen
- 47: radial äußere Statorkanäle
- 49: Ringspalt
- 51: Strömungsverbindung
- 53: radial innere Statorkanäle
- 54: Ablauföffnungen
- 55: Statorgehäuse-Sumpf
- 56: Elektromaschinen-Rückführpumpe
- 59: Getriebe-Rückführpumpe
- 65: Getriebe-Sumpf
- 67: Rückführleitung
- 68: Strömungsverbindung
- 69: Rückführleitung
- 71: zweite Elektromaschinen-Rückführpumpe
- 73: Rückführleitung
- 75: Mündungsöffnung
- 77: Saugstutzen
- A1: linke Absaugstelle
- A2: rechte Absaugstelle
- A3: weitere Absaugstelle
- G: Getriebe-Hydraulikkreis
- E: Elektromaschinen-Hydraulikkreis
- Z: Zahneingriffsstelle

## Patentansprüche

1. Kühlmittelversorgungssystem für eine Antriebsvorrichtung einer elektrisch betriebenen Fahrzeugachse eines zweispurigen Fahrzeugs mit einer Elektromaschine, wobei das Kühlmittelversorgungssystem einen Kühlmitteltank (35) und einen Elektromaschinen-Hydraulikkreis (E) aufweist, in dem der Innenraum eines zylindrischen Statorgehäuses (2) sowie ein Statorgehäuse-Sumpf (55) eingebunden sind, in dem sich das vom Statorgehäuse (2) ablaufende Kühlmittel sammelt, das von dort mittels zumindest einer Rückführpumpe (56, 59, 71) in den Kühlmitteltank (35) rückgeführt wird, **dadurch gekennzeichnet, dass** der Statorgehäuse-Sumpf (55) an jedem seiner axial gegenüberliegenden Axialseiten eine Absaugstelle (A1, A2, A3) aufweist, an der das Kühlmittel mittels der Rückführpumpe (56, 59, 71) abgesaugt wird, und dass an jeder Statorgehäuse-Axialseite am Statorgehäuseboden eine Ablauföffnung (54) ausgebildet ist, über die das Kühlmittel von einem jeweiligen Wickelkopfraum (27) in den Statorgehäuse-Sumpf (55) abgeführt wird.

2. Kühlmittelversorgungssystem nach Anspruch 1, **dadurch gekennzeichnet, dass** eine Elektromaschine im Quereinbau achsparallel zur Fahrzeugachse verbaut ist, und dass eine erste Absaugstelle (A1) des Statorgehäuse-Sumpfes (55) auf der linken Fahrzeugseite positioniert ist und die zweite Absaugstelle (A2) des Statorgehäuse-Sumpfes (55) auf der rechten Fahrzeugseite positioniert ist, und dass sich bei einer Fahrzeug-Kurvenfahrt nach links das Kühlmittel im Statorgehäuse-Sumpf (55) fliehkraftbedingt in Richtung rechte Absaugstelle (A2) verlagert, und bei einer Fahrzeug-Kurvenfahrt nach rechts sich das Kühlmittel im Statorgehäuse-Sumpf (55) fliehkraftbedingt in Richtung linke Absaugstelle (A1) verlagert, so dass bei Kurvenfahrten das Kühlmittel betriebssicher entweder von der ersten oder zweiten Absaugstelle (A1, A2) in den Kühlmitteltank (35) rückgeführt wird.

3. Kühlmittelversorgungssystem nach Anspruch 2, **dadurch gekennzeichnet, dass** in der Antriebsvorrichtung die Elektromaschine über ein Getriebe (19) auf, zu den Fahrzeugrädern geführte Flanschwellen (3) abtreibt, und dass das Kühlmittelversorgungssystem einen Getriebe-Hydraulikkreis (G) aufweist, in dem ein Getrieberaum und ein am Getriebeboden ausgebildeter Getriebe-Sumpf (65) eingebunden ist, in dem sich das von Getriebekomponenten ablaufende Kühlmittel an einer getriebeseitigen Absaugstelle (A1) sammelt, von der das Kühlmittel mit einer Getriebe-Rückführpumpe (59) in den Kühlmitteltank (35) rückgeführt wird, und dass das Getriebe (19) an einer Statorgehäuse-Axialseite angeordnet ist.

4. Kühlmittelversorgungssystem nach Anspruch 3, **dadurch gekennzeichnet, dass** zwischen dem Statorgehäuse-Sumpf (55) und dem Getriebe-Sumpf (55) eine Strömungsverbindung (68) ausgebildet ist, und dass das im Statorgehäuse-Sumpf (55) gesammelte Kühlmittel, infolge Kurvenfahrt, an der Strömungsverbindung (68) in den Getriebe-Sumpf (65) übergeleitet wird, so dass die getriebeseitige Absaugstelle (A1) in Doppelfunktion nicht nur das sich im Getriebe-Sumpf (65) sammelnde Kühlmittel, sondern auch das vom Statorgehäuse-Sumpf (55) übergeleitete Kühlmittel zum Kühlmitteltank (35) absaugt.

5. Kühlmittelversorgungssystem nach einem der Ansprüche 1 bis 3, **dadurch gekennzeichnet, dass** keine Strömungsverbindung zwischen dem Statorgehäuse-Sumpf (55) und dem Getriebe-Sumpf (55) ausgebildet ist, und dass an der getriebenahen Seite des Statorgehäuse-Sumpfes (55) eine eigene Statorgehäuse-Absaugstelle (A3) bereitgestellt ist, und dass der Statorgehäuse-Absaugstelle (A3) eine Elektromaschinen-Rückführpumpe (71) zugeordnet ist, die das Kühlmittel von der Statorgehäuse-Absaugstelle (A3) in Richtung Kühlmitteltank (35) rückführt.

6. Kühlmittelversorgungssystem nach den Ansprüchen 1 und 3, oder nach den Ansprüchen 1 und 5, **dadurch gekennzeichnet, dass** die Rückführpumpen (56, 59, 71) an einer gemeinsamen Statorgehäuse-Axialseite angeordnet sind, und dass der Statorgehäuse-Sumpf (55) sich in Axialrichtung bis zu den jeweiligen Statorgehäuse-Axialseiten erstreckt.

7. Kühlmittelversorgungssystem nach Anspruch 6, **dadurch gekennzeichnet, dass** die an der pumpenfernen Axialseite des Statorgehäuses (2) angeordnete Absaugstelle (A2) über eine Rückführleitung (69) mit der Elektromaschinen-Rückführpumpe (56) verbunden ist.

8. Kühlmittelversorgungssystem nach Anspruch 7, **dadurch gekennzeichnet, dass** die Rückführleitung (69) achsparallel zum Statorgehäuse-Sumpf (55) verläuft, und dass die Rückführleitung (69), bevorzugt zusammen mit dem Statorgehäuse-Sumpf (55), materialeinheitlich und einstückig am Statorgehäuse (2) angeformt ist.

## Claims

1. Coolant supply system for a drive device of an electrically operated vehicle axle of a two-track vehicle having an electric machine, wherein the coolant supply system has a coolant tank (35) and an electric machine hydraulic circuit (E) in which are incorporated the interior of a cylindrical stator housing (2) and a stator housing sump (55) in which the coolant flowing from the stator housing (2) accumulates, which coolant is recycled from there into the coolant tank (35) by means of at least one recirculating pump (56, 59, 71), **characterized in that** the stator housing sump (55) has, on each of its axially opposite axial sides, a suction point (A1, A2, A3) at which the coolant is suctioned by means of the recirculating pump (56, 59, 71), and **in that** an outflow opening (54) is formed on each stator housing axial side on the stator housing base, via which outflow opening the coolant is discharged from a respective winding overhang space (27) into the stator housing sump (55).

2. Coolant supply system according to Claim 1, **characterized in that** an electric machine is fitted in a transverse installation axially parallel to the vehicle axis, and **in that** a first suction point (A1) of the stator housing sump (55) is positioned on the left-hand side of the vehicle and the second suction point (A2) of the stator housing sump (55) is positioned on the right-hand side of the vehicle, and **in that**, while the vehicle negotiates curves towards the left, the coolant in the stator housing sump (55), due to the centrifugal force, is displaced in the direction of the right-hand suction point (A2) and, while the vehicle negotiates curves towards the right, the coolant in the stator housing sump (55), due to the centrifugal force, is displaced in the direction of the left-hand suction point (A1), in such a way that, when negotiating curves, the coolant is returned in an operationally reliable manner into the coolant tank (35) either from the first or the second suction point (A1, A2).

3. Coolant supply system according to Claim 2, **characterized in that**, in the drive device the electric machine outputs by way of a transmission (19) to flange shafts (3) leading to the vehicle wheels, and **in that** the coolant supply system has a transmission hydraulic circuit (G) in which are incorporated a transmission space and a transmission sump (65) which is formed on the transmission base, and in which the coolant flowing from the transmission components accumulates at a transmission-proximal suction point (A1) from where the coolant is returned into the coolant tank (35) by a transmission recirculating pump (59), and **in that** the transmission (19) is disposed on a stator housing axial side.

4. Coolant supply system according to Claim 3, **characterized in that** a fluidic connection (68) is formed between the stator housing sump (55) and the transmission sump (55), and **in that** the coolant accumulated in the stator housing sump (55), due to negotiating curves, is transferred at the fluidic connection (68) into the transmission sump (65) in such a way that the transmission-proximal suction point (A1) in the form of a dual function suctions not only the coolant accumulating in the transmission sump (65) but also the coolant transferred from the stator housing sump (55) into the coolant tank (35).

5. Coolant supply system according to one of Claims 1 to 3, **characterized in that** no fluidic connection is formed between the stator housing sump (55) and the transmission sump (55), and **in that** a dedicated stator housing suction point (A3) is provided on the transmission-proximal side of the stator housing sump (55), and **in that** the stator housing suction point (A3) is assigned an electric machine recirculating pump (71) which returns the coolant from the stator housing suction point (A3) in the direction of the coolant tank (35).

6. Coolant supply system according to Claims 1 and 3, or according to Claims 1 and 5, **characterized in that** the recirculating pumps (56, 59, 71) are disposed on a common stator housing axial side, and **in that** the stator housing sump (55) extends in the axial direction as far as the respective stator housing axial sides.

7. Coolant supply system according to Claim 6, **characterized in that** the suction point (A2) disposed on the pump-distal axial side of the stator housing (2) is connected to the electric machine recirculating pump (56) via a return line (69).

8. Coolant supply system according to Claim 7, **characterized in that** the return line (69) runs axially parallel to the stator housing sump (55), and **in that** the return line (69), preferably conjointly with the stator housing sump (55), is integrally formed on the stator housing (2) in the same material and in one piece.

## Revendications

1. Système d'alimentation en agent de refroidissement destiné à un dispositif d'entraînement d'un essieu de véhicule électrique d'un véhicule à deux voies comprenant une machine électrique, le système d'alimentation en agent de refroidissement présentant un réservoir (35) d'agent de refroidissement et un circuit hydraulique (E) de machine électrique, dans lequel sont intégrés l'espace intérieur d'un boîtier de stator cylindrique (2) ainsi qu'un puisard (55) de boîtier de stator dans lequel s'accumule l'agent de refroidissement provenant du boîtier de stator (2), lequel est renvoyé dans le réservoir (35) d'agent de refroidissement au moyen d'au moins une pompe de retour (56, 59, 71), **caractérisé en ce que** le puisard (55) de boîtier de stator présente sur chacun de ses côtés axiaux opposés un point d'aspiration (A1, A2, A3) au niveau duquel l'agent de refroidissement est aspiré au moyen de la pompe de retour (56, 59, 71), et **en ce qu'**une ouverture d'écoulement (54) est formée sur le fond du boîtier du stator sur chaque côté axial du boîtier du stator, par laquelle l'agent de refroidissement est évacué d'un espace respectif (27) de tête d'enroulement dans le puisard (55) de boîtier de stator.

2. Système d'alimentation en agent de refroidissement selon la revendication 1, **caractérisé en ce qu'**une machine électrique est installée transversalement, parallèlement à l'axe du véhicule, et **en ce qu'**un premier point d'aspiration (A1) du puisard (55) de boîtier de stator est positionné sur le côté gauche du véhicule et le deuxième point d'aspiration (A2) du puisard (55) de boîtier de stator est positionné sur le côté droit du véhicule, et **en ce que**, lorsque le véhicule prend un virage vers la gauche, l'agent de refroidissement présent dans le puisard (55) de boîtier de stator se déplace par effet de la force centrifuge en direction du point d'aspiration droit (A2), et **en ce que**, lorsque le véhicule prend un virage vers la droite, l'agent de refroidissement présent dans le puisard (55) de boîtier de stator se déplace par effet de la force centrifuge en direction du point d'aspiration gauche (A1), de sorte que, dans les virages, l'agent de refroidissement est renvoyé de manière fiable soit par le premier, soit par le deuxième point d'aspiration (A1, A2) dans le réservoir (35) d'agent de refroidissement.

3. Système d'alimentation en agent de refroidissement selon la revendication 2, **caractérisé en ce que** dans le dispositif d'entraînement, la machine électrique entraîne, par l'intermédiaire d'une transmission (19), des arbres à brides (3) menant aux roues du véhicule, et **en ce que** le système d'alimentation en agent de refroidissement comprend un circuit hydraulique d'entraînement (G) dans lequel sont intégrés un espace de transmission et un puisard (65) de boîtier de transmission formé sur le fond de la transmission, l'agent de refroidissement qui s'écoule des composants de la transmission s'accumulant au niveau d'un point d'aspiration (A1) situé côté transmission, à partir duquel l'agent de refroidissement est renvoyé dans le réservoir (35) d'agent de refroidissement au moyen d'une pompe de retour (59) de la transmission, et **en ce que** la transmission (19) est agencée sur un côté axial du boîtier du stator.

4. Système d'alimentation en agent de refroidissement selon la revendication 3, **caractérisé en ce qu'**une liaison d'écoulement (68) est formée entre le puisard (55) de boîtier de stator et le puisard (55) de transmission, et **en ce que** l'agent de refroidissement collecté dans le puisard (55) de boîtier de stator est transféré, en raison de la conduite en virage, au boîtier de transmission (65) au niveau de la liaison d'écoulement (68), de sorte que le point d'aspiration côté transmission (A1) a une double fonction et aspire non seulement l'agent de refroidissement qui s'accumule dans le boîtier de transmission (65), mais aussi l'agent de refroidissement transféré du puisard (55) de boîtier de stator vers le réservoir (35) d'agent de refroidissement.

5. Système d'alimentation en agent de refroidissement selon l'une des revendications 1 à 3, **caractérisé en ce qu'**il ne présente pas de liaison d'écoulement entre le puisard (55) de boîtier de stator et le puisard (55) de transmission, et **en ce qu'**un point d'aspiration (A3) propre au boîtier de stator est prévu du côté du puisard (55) du boîtier de stator proche de la transmission, et **en ce qu'**une pompe de retour (71) de machine électrique est associée au point d'aspiration (A3) du boîtier de stator, laquelle pompe renvoie l'agent de refroidissement depuis le point d'aspiration (A3) du boîtier de stator vers le réservoir (35) d'agent de refroidissement.

6. Système d'alimentation en agent de refroidissement selon les revendications 1 et 3, ou selon les revendications 1 et 5, **caractérisé en ce que** les pompes de retour (56, 59, 71) sont agencées sur un côté axial commun du boîtier de stator, et **en ce que** le puisard (55) de boîtier du stator s'étend dans le sens axial jusqu'aux côtés axiaux respectifs du boîtier de stator.

7. Système d'alimentation en agent de refroidissement selon la revendication 6, **caractérisé en ce que** le point d'aspiration (A2) situé sur le côté axial du boîtier de stator (2) éloigné de la pompe est relié à la pompe de retour (56) de machine électrique par une conduite de retour (69).

8. Système d'alimentation en agent de refroidissement selon la revendication 7, **caractérisé en ce que** la conduite de retour (69) s'étend parallèlement à l'axe du puisard (55) de boîtier de stator et **en ce que** la conduite de retour (69) est formée d'un seul tenant avec le boîtier de stator (2), de préférence avec le puisard (55) de boîtier de stator, de manière à former une seule et même pièce avec le boîtier de stator (2).
